# EUROPEAN PATENT SPECIFICATION

(11) **EP 4 254 213 B1**
(45) Date of publication and mention of the grant of the patent: **18.02.2026**
(21) Application number: 22862371.6
(22) Date of filing: 28.06.2022
(51) Int. Cl.: G06F 15/78

(54) **SPEECH CHIP IMPLEMENTATION METHOD, SPEECH CHIP, AND RELATED DEVICE**
IMPLEMENTIERUNGSVERFAHREN FÜR SPRACHCHIP, SPRACHCHIP UND ZUGEHÖRIGE VORRICHTUNG
PROCÉDÉ DE MISE EN OEUVRE DE PUCE DE PAROLE, PUCE DE PAROLE ET DISPOSITIF ASSOCIÉ

(30) Priority: 17.02.2022 CN 202210146843
(43) Date of publication of application: 04.10.2023
(73) Proprietor: BEIJING BAIDU NETCOM SCIENCE TECHNOLOGY CO., LTD., 100085 Beijing (CN)
(72) Inventor: YAN, Xiaoping, Beijing 100085 (CN); TIAN, Chao, Beijing 100085 (CN)
(74) Representative: dompatent
(86) International application number: PCT/CN2022/101760
(87) International publication number: WO 2023/155359

(56) References cited:
- WO-A1-2020/199189
- CN-A- 110 265 029
- CN-A- 111 694 402
- CN-A- 111 694 532
- CN-A- 114 647 610
- US-A1- 2007 283 358
- US-A1- 2016 275 043
- US-A1- 2020 402 514

## Description

This application claims priority to Chinese Patent Application No. 202210146843.7, entitled "VOICE CHIP IMPLEMENTATION METHOD, VOICE CHIP, AND RELATED DEVICE", and filed on February 17, 2022.

### Field of the Disclosure

The present disclosure relates to the technical field of artificial intelligence (AI), and in particular, to a method of voice chip implementation, a voice chip, an intelligent voice product, an electronic device, and a storage medium in fields such as intelligent voice and AI chips.

### Background of the Disclosure

In a current intelligent voice product such as a smart speaker, a dual-chip design is generally adopted. That is, a chip processing function in the intelligent voice product is completed by using two voice chips, and the two chips are configured to complete different functions respectively. However, implementation costs are high due to the need to use two chips.

A patent application US2020402514A1, published on December 24, 2020, entitled "Speech chip and electronic device", describes a speech chip that includes a first processor configured to determine whether the speech signal contains a wake-up word according to the speech signal and a second processor configured to perform signal denoising and speech recognition on the speech signal.

### Summary of the Disclosure

The present disclosure provides a method of voice chip implementation, a voice chip, an intelligent voice product, an electronic device, and a storage medium.

The present disclosure is set out in the appended set of claims.

A method of voice chip implementation, including:
constructing a voice chip including a first Digital Signal Processor (DSP) and a second DSP, the first DSP and the second DSP corresponding to a same Digital Signal Processor core Identifier (DSP core IP) and adopting heterogeneous designs; and
completing a chip processing function in a corresponding intelligent voice product by using the voice chip, wherein different functions are completed by using the first DSP and the second DSP respectively.

A voice chip, including: a first DSP and a second DSP;
the first DSP and the second DSP corresponding to a same DSP core IP; and
the voice chip being configured to realize a chip processing function in an intelligent voice product, wherein the first DSP and the second DSP adopt heterogeneous designs and are respectively configured to implement different functions in the intelligent voice product.

An intelligent voice product, including: the voice chip as described above.

An electronic device, including:
at least one processor; and
a memory in communication connection with the at least one processor; wherein
the memory stores instructions executable by the at least one processor, and the instructions are executed by the at least one processor to enable the at least one processor to perform the method as described above.

A non-transitory computer-readable storage medium storing computer instructions, wherein the computer instructions are configured to cause a computer to perform the method as described above.

A computer program product, including a computer program/instruction, wherein, when the computer program/instruction is executed by a processor, the method as described above is performed.

One of the above disclosed embodiments has the following advantages or beneficial effects. The chip processing function in the corresponding intelligent voice product can be completed by using the constructed voice chip including two DSPs, and the two DSPs can adopt heterogeneous designs and be configured to complete different functions respectively, so as to realize replacement of the dual chips in the original intelligent voice product with a single chip, thereby reducing implementation costs. Besides, the two DSPs correspond to a same DSP core IP, thereby further reducing the implementation costs.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,
FIG. 1 is a flowchart of an embodiment of a method of voice chip implementation according to the present disclosure;
FIG. 2 is a schematic diagram of a composition structure of a first DSP according to the present disclosure;
FIG. 3 is a schematic diagram of a composition structure of a second DSP according to the present disclosure;
FIG. 4 is a schematic diagram of a composition structure of a voice chip according to the present disclosure;
FIG. 5 is a schematic diagram of a composition structure of a first embodiment of a voice chip 500 according to the present disclosure;
FIG. 6 is a schematic diagram of a composition structure of a second embodiment of a voice chip 600 according to the present disclosure;
FIG. 7 is a schematic diagram of a composition structure of an embodiment of an intelligent voice product 700 according to the present disclosure; and
FIG. 8 is a schematic block diagram of an electronic device 800 that may be configured to implement an embodiment of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope of the present disclosure. Similarly, for clarity and simplicity descriptions of well-known functions and structures are omitted in the following description.

In addition, it should be understood that the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

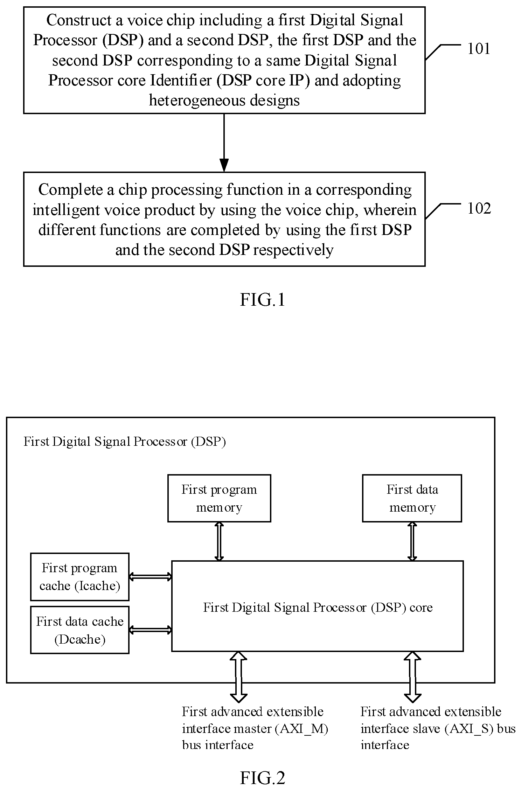

FIG. 1 is a flowchart of an embodiment of a method of voice chip implementation according to the present disclosure. As shown in FIG. 1, the following specific implementation is included.

In step 101, a voice chip including a first DSP and a second DSP is constructed, the first DSP and the second DSP corresponding to a same DSP core IP and adopting heterogeneous designs.

In step 102, a chip processing function in a corresponding intelligent voice product is completed by using the voice chip, wherein different functions are completed by using the first DSP and the second DSP respectively.

As can be seen, in the solution of the above method embodiment, the chip processing function in the corresponding intelligent voice product can be completed by using the constructed voice chip including two DSPs, and the two DSPs can adopt heterogeneous designs and be configured to complete different functions respectively, so as to realize replacement of the dual chips in the original intelligent voice product with a single chip, thereby reducing implementation costs. Besides, the two DSPs correspond to a same DSP core IP, thereby further reducing the implementation costs.

For ease of expression, the two DSPs in the voice chip are called the first DSP and the second DSP respectively. Since the DSP core IP is costly, in the solution of the present disclosure, the first DSP and the second DSP may correspond to the same DSP core IP to reduce the implementation costs.

The two DSPs are configured to complete different functions respectively. In an embodiment of the present disclosure, the function completed by the first DSP includes: voice wake-up and voice recognition, and the function completed by the second DSP includes: an operating system, voice compression transmission, and extended wireless protocol connection.

For example, the operating system may be a Free Embedded Real-time Operating System (FreeRTOS), and a wireless protocol may include Bluetooth (BT), Wireless Fidelity (WIFI), and the like.

Different functions correspond to different requirements. For example, in order to realize the functions of voice wake-up and voice recognition, a required storage capacity is relatively fixed and relatively small, preferably 256 KB, but real-time requirements for programs and data are relatively high. However, in order to realize the functions such as the operating system, the voice compression transmission, and the extended wireless protocol connection, the required storage capacity is relatively large and not fixed, but the real-time requirements for programs and data are relatively low. To this end, in the solution of the present disclosure, the first DSP and the second DSP may adopt heterogeneous designs.

Specifically, in an embodiment of the present disclosure, the first DSP may adopt a standard configuration, including: a first DSP core, a first program memory, a first data memory, a first program cache (Icache), a first data cache (Dcache), a first advanced extensible interface master (AXI_M) bus interface, and a first advanced extensible interface slave (AXI_S) bus interface. The first data memory may be a dynamic random access memory (DRAM). The first program memory may be an IRAM, that is, highly integrated DRAM.

In an embodiment of the present disclosure, the second DSP may adopt a non-standard configuration, including: a second DSP core, a second Icache, a second Dcache, and a second AXI_M bus interface.

For ease of expression, the DSP core in the first DSP is called the first DSP core, the DSP core in the second DSP is called the second DSP core, and others are similar thereto. Details are not described again.

For the first DSP and the second DSP, the DSP core therein may be configured to complete various calculation and control functions, the program memory may be configured to store a DSP running program, using a local interface, the data memory may be configured to store DSP interaction data, using a local interface, the Icache may be configured to store an DSP extender or to access a program on an external device, the Dcache may be configured to store DSP extended data or to access data on the external device, the AXI_M bus interface may be configured for the DSP core to perform data operations on the external device, and the AXI_S bus interface may be configured for the external device to operate storage spaces of the program memory and the data memory.

A device may be classified as a master device and a slave device. The master device has the initiative, for example, which may read data from the slave device, may ingest data into the slave device, and the like, while the slave device is not initiative and may be used by the master device for data reading and data ingestion, and the like.

As described above, the first DSP may adopt a standard configuration, that is, there is no need to modify the first DSP, thereby being compatible with existing implementations, reducing implementation complexity, and so on.

Compared with the first DSP, the program memory and the data memory are removed from the second DSP. Correspondingly, in an embodiment of the present disclosure, the second DSP may access the external device through the second Icache and the second Dcache to acquire required programs and data.

In an embodiment of the present disclosure, the external device is located in the voice chip, and may include a Double Data Rate (DDR) synchronous DRAM controller and/or a Pseudo Static Random Access Memory (PSRAM).

The external device such as the DDR synchronous DRAM controller and/or the PSRAM has a relatively large storage space, so as to well meet a requirement of the second DSP to complete the functions such as the operating system, the voice compression transmission, and the extended wireless protocol connection.

The program memory and the data memory are removed from the second DSP, and the AXI_S bus interface may be configured for the external device to operate storage spaces of the program memory and the data memory. Therefore, correspondingly, the AXI_S bus interface in the second DSP can be removed.

In other words, the program memory, the data memory, and the AXI_S bus interface may be removed from the second DSP, thereby reducing implementation costs of the voice chip as a whole.

In an embodiment of the present disclosure, the second DSP may be further configured to share storage spaces of the first program memory and the first data memory through the second AXI_M bus interface and the first AXI_S bus interface, thereby increasing the storage space of the second DSP, improving efficiency of information interaction between the two DSPs, and so on.

In an actual application, simple address decoding may be performed on the first AXI_S bus interface, so that the second DSP can share the storage spaces of the first program memory and the first data memory through the second AXI_M bus interface and the first AXI_S bus interface.

Based on the above introduction, FIG. 2 is a schematic diagram of a composition structure of a first DSP according to the present disclosure. As shown in FIG. 2, a first DSP core, a first program memory, a first data memory, a first Icache, a first Dcache, a first AXI_M bus interface, and a first AXI_S bus interface may be included.

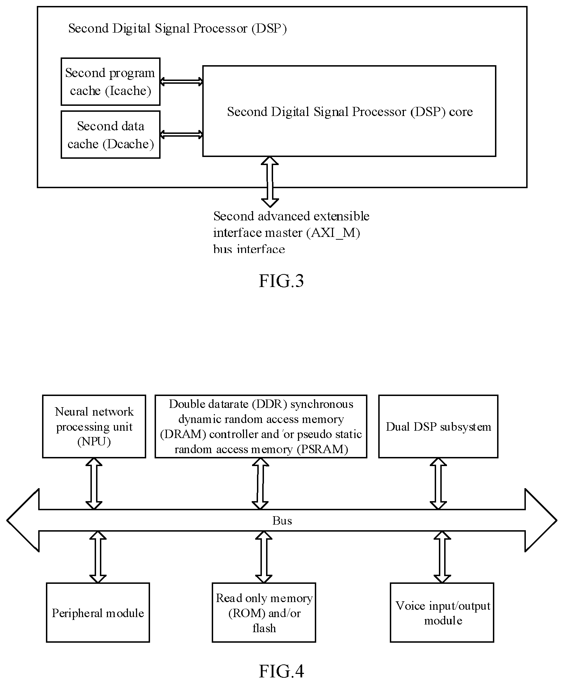

FIG. 3 is a schematic diagram of a composition structure of a second DSP according to the present disclosure. As shown in FIG. 3, a second DSP core, a second Icache, a second Dcache, and a second AXI_M bus interface may be included.

In an actual application, in addition to the first DSP, the second DSP, and the DDR synchronous DRAM controller and/or the PSRAM, the voice chip constructed in the manner according to the present disclosure may further include some other components, as shown in FIG. 4.

FIG. 4 is a schematic diagram of a composition structure of a voice chip according to the present disclosure. As shown in FIG. 4, a dual DSP subsystem formed by a first DSP and a second DSP, a DDR synchronous DRAM controller and/or a PSRAM, a Neural Network Processing unit (NPU), a peripheral module, a voice input/output module, a Read Only Memory (ROM) and/or a flash, and the like may be included.

Compared with the first DSP and the second DSP, other components may all be referred to as an external device.

The NPU may be configured for implementation of a neural network algorithm. The DDR synchronous DRAM controller and/or the PSRAM are/is used as an external storage device, and may be configured to store programs and data required for the second DSP, and so on. The peripheral module may include communication interfaces such as a Serial Peripheral Interface (SPI), a high-speed Universal Asynchronous Receiver/Transmitter (UART) interface, and a Secure Digital Input and Output (SDIO) interface. The high-speed UART interface may be configured for BT connection, and the SDIO interface may be configured for connection of a WIFI module to realize a wireless communication extension function. The ROM and/or the flash may be configured to store a boot program of the DSP. For example, the first DSP may acquire the boot program from the ROM and/or the flash, and after completing a startup operation, release a startup right to the second DSP, and then the second DSP acquires the boot program from the ROM and/or the flash, complete a startup operation, and so on. The voice input/output module may be configured for voice input and output, and support devices in various audio formats such as an Inter-IC Sound (I2S) bus, Pulse Density Modulation (PDM), and Time Division Multiplexing (TDM).

As shown in FIG. 4, the components in the voice chip may be connected through a bus, exchange information with one another through the bus, and so on.

In brief, by use of the solution in the method embodiments of the present disclosure, the dual chips in the original intelligent voice product can be replaced with a single chip, thereby reducing the implementation costs and making the product more competitive. In addition, the intelligent voice product may be a variety of intelligent voice products such as a smart speaker and a vehicle-mounted voice product, and has wide applicability.

It is to be noted that, to make the description brief, the foregoing method embodiments are expressed as a series of actions. However, those skilled in the art should appreciate that the present disclosure is not limited to the described action sequence, because according to the present disclosure, some steps may be performed in other sequences or performed simultaneously. In addition, those skilled in the art should also appreciate that all the embodiments described in the specification are preferred embodiments, and the actions and modules involved are not necessarily mandatory to the present disclosure.

The above is the introduction to the method embodiments. The following is a further illustration of the solutions of the present disclosure through apparatus embodiments.

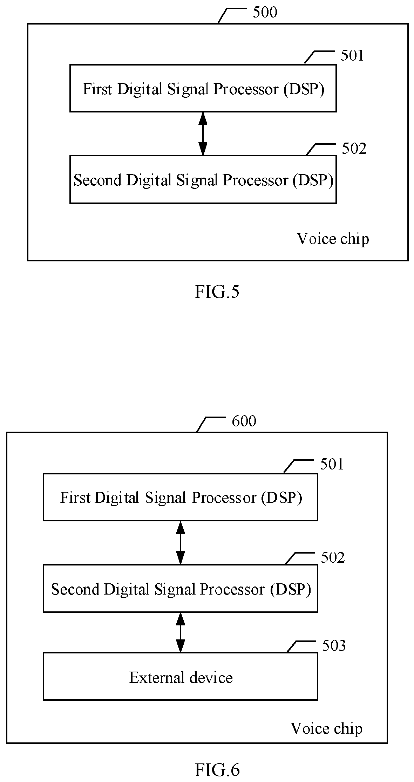

FIG. 5 is a schematic diagram of a composition structure of a first embodiment of a voice chip 500 according to the present disclosure. As shown in FIG. 5, a first DSP 501 and a second DSP 502 are included.

The first DSP 501 and the second DSP 502 correspond to a same DSP core IP.

The voice chip 500 is configured to realize a chip processing function in an intelligent voice product, wherein the first DSP 501 and the second DSP 502 adopt heterogeneous designs and are respectively configured to implement different functions in the intelligent voice product.

In the solution of the above embodiment, the chip processing function in the corresponding intelligent voice product can be completed by using the constructed voice chip including two DSPs, and the two DSPs can adopt heterogeneous designs and be configured to complete different functions respectively, so as to realize replacement of the dual chips in the original intelligent voice product with a single chip, thereby reducing implementation costs. Besides, the two DSPs correspond to a same DSP core IP, thereby further reducing the implementation costs.

The two DSPs are configured to complete different functions respectively. In an embodiment of the present disclosure, the function completed by the first DSP 501 may include: voice wake-up and voice recognition, and the function completed by the second DSP 502 may include: an operating system, voice compression transmission, and extended wireless protocol connection.

Different functions correspond to different requirements. For example, in order to realize the functions of voice wake-up and voice recognition, a required storage capacity is relatively fixed and relatively small, but real-time requirements for programs and data are relatively high. However, in order to realize the functions such as the operating system, the voice compression transmission, and the extended wireless protocol connection, the required storage capacity is relatively large and not fixed, but the real-time requirements for programs and data are relatively low. To this end, in the solution of the present disclosure, the first DSP 501 and the second DSP 502 may adopt heterogeneous designs.

Specifically, in an embodiment of the present disclosure, the first DSP 501 may adopt a standard configuration, including: a first DSP core, a first program memory, a first data memory, a first Icache, a first Dcache, a first AXI_M bus interface, and a first AXI_S bus interface.

In an embodiment of the present disclosure, the second DSP 502 may adopt a non-standard configuration, including: a second DSP core, a second Icache, a second Dcache, and a second AXI_M bus interface.

Compared with the first DSP 501, the program memory, the data memory, and the AXI_S bus interface are removed from the second DSP 502.

FIG. 6 is a schematic diagram of a composition structure of a second embodiment of a voice chip 600 according to the present disclosure. As shown in FIG. 6, a first DSP 501, a second DSP 502, and an external device 503 are included.

Correspondingly, in an embodiment of the present disclosure, the second DSP 502 may further access the external device 503 through the second Icache and the second Dcache to acquire required programs and data.

In an embodiment of the present disclosure, the external device 503 may include: a DDR synchronous DRAM controller and/or a PSRAM.

The second DSP 502 in the embodiments shown in FIG. 5 and FIG. 6 may further share storage spaces of the first program memory and the first data memory through the second AXI_M bus interface and the first AXI_S bus interface.

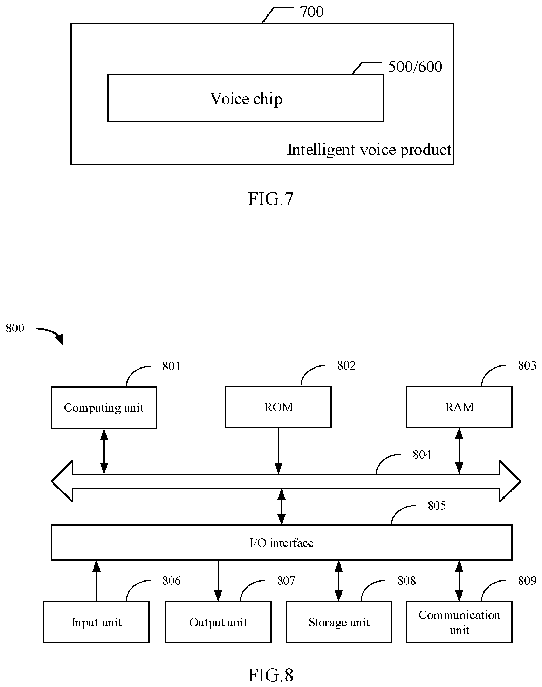

FIG. 7 is a schematic diagram of a composition structure of an embodiment of an intelligent voice product 700 according to the present disclosure. As shown in FIG. 7, the voice chip 500 as described above or the voice chip 600 as described above is included.

Specific operation flows of the embodiments shown in FIG. 5, FIG. 6, and FIG. 7 may be obtained with reference to the related description in the above method embodiments. Details are not described again.

In brief, by use of the solution in the above embodiment, the dual chips in the original intelligent voice product can be replaced with a single chip, thereby reducing the implementation costs and making the product more competitive. In addition, the intelligent voice product may be a variety of intelligent voice products such as a smart speaker and a vehicle-mounted voice product, and has wide applicability.

The solutions of the present disclosure may be applied to the field of AI, and in particular, relate to fields such as intelligent voice and AI chips. AI is a discipline that studies how to make computers simulate certain thinking processes and intelligent behaviors (such as learning, reasoning, thinking, and planning) of human beings, which includes hardware technologies and software technologies. The AI hardware technologies generally include sensors, dedicated AI chips, cloud computing, distributed storage, big data processing, and other technologies. The AI software technologies mainly include a computer vision technology, a speech recognition technology, a natural language processing technology, machine learning/deep learning, a big data processing technology, a knowledge graph technology, and other major directions.

The voice in the embodiments of the present disclosure is not specific to a specific user and does not reflect a specific user's personal information. In addition, the voice can be acquired in various public, legal and compliant manners, such as acquired from the user after the user's authorization.

Collection, storage, use, processing, transmission, provision, and disclosure of users' personal information involved in the technical solutions of the present disclosure comply with relevant laws and regulations, and do not violate public order and moral.

According to embodiments of the present disclosure, the present disclosure further provides an electronic device, a readable storage medium, and a computer program product.

FIG. 8 is a schematic block diagram of an electronic device 800 that may be configured to implement an embodiment of the present disclosure. The electronic device is intended to represent various forms of digital computers, such as laptops, desktops, workbenches, servers, blade servers, mainframe computers, and other suitable computers. The electronic device may further represent various forms of mobile devices, such as personal digital assistants, cellular phones, smart phones, wearable devices, and other similar computing devices. The components, their connections and relationships, and their functions shown herein are examples only, and are not intended to limit the implementation of the present disclosure as described and/or required herein.

As shown in FIG. 8, the device 800 includes a computing unit 801, which may perform various suitable actions and processing according to a computer program stored in a read-only memory (ROM) 802 or a computer program loaded from a storage unit 808 into a random access memory (RAM) 803. The RAM 803 may also store various programs and data required to operate the device 800. The computing unit 801, the ROM 802, and the RAM 803 are connected to one another by a bus 804. An input/output (I/O) interface 805 is also connected to the bus 804.

A plurality of components in the device 800 are connected to the I/O interface 805, including an input unit 806, such as a keyboard and a mouse; an output unit 807, such as various displays and speakers; a storage unit 808, such as disks and discs; and a communication unit 809, such as a network card, a modem and a wireless communication transceiver. The communication unit 809 allows the device 800 to exchange information/data with other devices over computer networks such as the Internet and/or various telecommunications networks.

The computing unit 801 may be a variety of general-purpose and/or special-purpose processing components with processing and computing capabilities. Some examples of the computing unit 801 include, but are not limited to, a central processing unit (CPU), a graphics processing unit (GPU), various AI computing chips, various computing units that run machine learning model algorithms, a digital signal processor (DSP), and any appropriate processor, controller or microcontroller, etc. The computing unit 801 performs the methods and processing described above, such as the method described in the present disclosure. For example, in some embodiments, the method described in the present disclosure may be implemented as a computer software program that is tangibly embodied in a machine-readable medium, such as the storage unit 808. In some embodiments, part or all of a computer program may be loaded and/or installed on the device 800 via the ROM 802 and/or the communication unit 809. One or more steps of the method described in the present disclosure may be performed when the computer program is loaded into the RAM 803 and executed by the computing unit 801. Alternatively, in other embodiments, the computing unit 801 may be configured to perform the method described in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and commands from a storage system, at least one input apparatus, and at least one output apparatus, and to transmit data and commands to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, the machine-readable medium may be tangible media which may include or store programs for use by or in conjunction with an instruction execution system, apparatus or device. The machine-readable medium may be a machine-readable signal medium or machine-readable storage medium. The machine-readable medium may include, but is not limited to, an electronic, magnetic, optical, electromagnetic, infrared, or semiconductor system, apparatus or device, or any suitable combinations thereof. More specific examples of a machine-readable storage medium may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the scope of protection of the present disclosure. Those skilled in the art should understand that various modifications, combinations, sub-combinations, and replacements can be made according to design requirements and other factors.

## Claims

1. A method of voice chip implementation, comprising:
constructing (101) a voice chip comprising a first Digital Signal Processor (DSP) and a second DSP, the first DSP and the second DSP corresponding to a same Digital Signal Processor core Identifier (DSP core IP) and adopting heterogeneous designs; and
completing (102) a chip processing function in a corresponding intelligent voice product by using the voice chip, wherein different functions are completed by using the first DSP and the second DSP respectively, **characterized in that**
the first DSP adopts a standard configuration with program and data memories, comprising: a first DSP core, a first program memory, a first data memory, a first program cache (Icache), a first data cache (Dcache), a first advanced extensible interface master (AXI_M) bus interface, and a first advanced extensible interface slave (AXI_S) bus interface,
the second DSP adopts a non-standard configuration without program and data memories, comprising: a second DSP core, a second Icache, a second Dcache, and a second AXI_M bus interface; and the second DSP accesses an external device through the second Icache and the second Dcache to acquire required programs and data,
wherein the second DSP is further configured to share storage spaces of the first program memory and the first data memory through the second AXI_M bus interface and the first AXI_S bus interface,
wherein the first DSP is configured to realize a first function which requires a fixed storage capacity, and the second DSP is configured to realize a second function which requires a non-fixed storage capacity, and the second function has a lower requirement on real time performance than the first function.

2. The method according to claim 1, wherein
the external device is located in the voice chip; and
the external device comprises: a Double Datarate (DDR) Synchronous Dynamic Random Access Memory (DRAM) controller and/or a Pseudo Static Random Access Memory (PSRAM).

3. The method according to claim 1 or 2, wherein
the first function completed by the first DSP comprises: voice wake-up and voice recognition; and
the second function completed by the second DSP comprises: an operating system, voice compression transmission, and extended wireless protocol connection.

4. A voice chip (500, 600), comprising: a first DSP and a second DSP;
the first DSP (501) and the second DSP (502) corresponding to a same DSP core IP; and
the voice chip (500, 600) being configured to realize a chip processing function in an intelligent voice product, wherein the first DSP (501) and the second DSP (502) adopt heterogeneous designs and are respectively configured to implement different functions in the intelligent voice product, , **characterized in that**
the first DSP (501) adopts a standard configuration with program and data memories, comprising: a first DSP core, a first program memory, a first data memory, a first Icache, a first Dcache, a first AXI_M bus interface, and a first AXI_S bus interface,
the second DSP (502) adopts a non-standard configuration without program and data memories, comprising: a second DSP core, a second Icache, a second Dcache, and a second AXI_M bus interface; and the voice chip (500, 600) further comprises: an external device (503); and the second DSP (502) is further configured to access the external device (503) through the second Icache and the second Dcache to acquire required programs and data, and
the second DSP (502) is further configured to share storage spaces of the first program memory and the first data memory through the second AXI_M bus interface and the first AXI_S bus interface,
wherein the first DSP is configured to realize a first function which requires a fixed storage capacity, and the second DSP is configured to realize a second function which requires a non-fixed storage capacity, and the second function has a lower requirement on real time performance than the first function.

5. The voice chip (500, 600) according to claim 3, wherein
the external device (503) comprises: a DDR synchronous DRAM controller and/or a PSRAM.

6. An intelligent voice product (700), comprising: the voice chip (500, 600) according to claim 4 or 5.

7. A non-transitory computer-readable storage medium storing computer instructions which, when executed by a voice chip according to claim 4 or 5, cause the voice chip to perform the method according to any one of claims 1 to 3.

8. A computer program product, comprising instructions which, when the program is executed by a voice chip according to claim 4 or 5, cause the voice chip to perform the method according to any one of claims 1 to 3.

## Patentansprüche

1. Verfahren zur Sprachchip-Implementierung, das umfasst:
Konstruieren (101) eines Sprachchips, der einen ersten digitalen Signalprozessor (DSP) und einen zweiten DSP umfasst, wobei der erste DSP und der zweite DSP demselben digitalen Signalprozessorkern-Identifikator (DSP Core IP) entsprechen und heterogene Designs annehmen; und
Abschließen (102) einer Chipverarbeitungsfunktion in einem entsprechenden intelligenten Sprachprodukt unter Verwendung des Sprachchips, wobei verschiedene Funktionen unter Verwendung des ersten DSP bzw. des zweiten DSP abgeschlossen werden, **dadurch gekennzeichnet, dass**
der erste DSP eine Standardkonfiguration mit Programm- und Datenspeichern annimmt, aufweisend: einen ersten DSP-Kern, einen ersten Programmspeicher, einen ersten Datenspeicher, einen ersten Programm-Cache (Icache), einen ersten Daten-Cache (Dcache), eine erste Advanced-Extensible-Interface-Master- (AXI_M) Busschnittstelle und eine erste Advances-Extensibole-Interface-Slave- (AXI_S) Busschnittstelle,
der zweite DSP eine Nicht-Standardkonfiguration ohne Programm- und Datenspeicher annimmt, aufweisend: einen zweiten DSP-Kern, einen zweiten Icache, einen zweiten Dcache und eine zweite AXI_M-Bus-Schnittstelle; und der zweite DSP über den zweiten Icache und den zweiten Dcache auf ein externes Gerät zugreift, um die erforderlichen Programme und Daten zu erfassen,
wobei der zweite DSP ferner so ausgebildet ist, dass er Speicherplätze des ersten Programmspeichers und des ersten Datenspeichers über die zweite AXI_M-Bus-schnittstelle und die erste AXI_S-Busschnittstelle gemeinsam nutzt,
wobei der erste DSP so ausgebildet ist, dass er eine erste Funktion realisiert, die eine feste Speicherkapazität erfordert, und der zweite DSP so ausgebildet ist, dass er eine zweite Funktion realisiert, die eine nicht-feste Speicherkapazität erfordert, und die zweite Funktion eine geringere Anforderung an die Echtzeitleistung hat als die erste Funktion.

2. Verfahren nach Anspruch 1, wobei
sich das externe Gerät in dem Sprachchip befindet; und
das externe Gerät aufweist: einen Double Datarate (DDR) Synchronous Dynamic Random Access Memory (DRAM) Controller und/oder ein Pseudo Static Random Access Memory (PSRAM).

3. Verfahren nach Anspruch 1 oder 2, wobei
die erste Funktion, die von dem ersten DSP ausgeführt wird, umfasst: Voice Wake-up und Spracherkennung; und
die zweite Funktion, die von dem zweiten DSP ausgeführt wird, umfasst: ein Betriebssystem, Sprachkompressionsübertragung und erweiterte drahtlose Protokollverbindung.

4. Sprachchip (500, 600), der aufweist: einen ersten DSP und einen zweiten DSP;
wobei der erste DSP (501) und der zweite DSP (502) demselben DSP-Kern-IP entsprechen; und
der Sprachchip (500, 600) so ausgebildet ist, dass er eine Chipverarbeitungsfunktion in einem intelligenten Sprachprodukt realisiert, wobei der erste DSP (501) und der zweite DSP (502) heterogene Designs annehmen und jeweils ausgebildet sind, um verschiedene Funktionen in dem intelligenten Sprachprodukt zu implementieren, **dadurch gekennzeichnet, dass**
der erste DSP (501) eine Standardkonfiguration mit Programm- und Datenspeichern annimmt, aufweisend: einen ersten DSP-Kern, einen ersten Programmspeicher, einen ersten Datenspeicher, einen ersten Icache, einen ersten Dcache, eine erste AXI_M-Busschnittstelle und eine erste AXI_S-Busschnittstelle,
der zweite DSP (502) eine Nicht-Standardkonfiguration ohne Programm- und Datenspeicher annimmt, aufweisend: einen zweiten DSP-Kern, einen zweiten Icache, einen zweiten Dcache und eine zweite AXI_M-Bus-Schnittstelle; und der Sprachchip (500, 600) ferner aufweist: ein externes Gerät (503); und der zweite DSP (502) ferner so ausgebildet ist, dass er über den zweiten Icache und den zweiten Dcache auf das externe Gerät (503) zugreift, um erforderliche Programme und Daten zu erfassen, und
der zweite DSP (502) ferner so ausgebildet ist, dass er Speicherplätze des ersten Programmspeichers und des ersten Datenspeichers über die zweite AXI_M-Bus-schnittstelle und die erste AXI_S-Busschnittstelle gemeinsam nutzt,
wobei der erste DSP so ausgebildet ist, dass er eine erste Funktion realisiert, die eine feste Speicherkapazität erfordert, und der zweite DSP so ausgebildet ist, dass er eine zweite Funktion realisiert, die eine nicht-feste Speicherkapazität erfordert, und die zweite Funktion eine geringere Anforderung an die Echtzeitleistung hat als die erste Funktion.

5. Sprachchip (500, 600) nach Anspruch 3, wobei
das externe Gerät (503) aufweist: einen DDR-Synchron-DRAM-Controller und/oder ein PSRAM.

6. Intelligentes Sprachprodukt (700), das aufweist: den Sprachchip (500, 600) nach Anspruch 4 oder 5.

7. Nicht-transitorisches computerlesbares Speichermedium, das Computeranweisungen speichert, die, wenn sie von einem Sprachchip nach Anspruch 4 oder 5 ausgeführt werden, den Sprachchip veranlassen, das Verfahren nach einem der Ansprüche 1 bis 3 durchzuführen.

8. Computerprogrammprodukt, das Anweisungen enthält, die, wenn das Programm von einem Sprachchip nach Anspruch 4 oder 5 ausgeführt wird, den Sprachchip veranlassen, das Verfahren nach einem der Ansprüche 1 bis 3 durchzuführen.

## Revendications

1. Procédé de mise en œuvre de puce vocale, comprenant les étapes consistant à :
construire (101) une puce vocale comprenant un premier processeur de signaux numériques (DSP) et un second DSP, le premier DSP et le second DSP correspondant à un même identifiant de cœur de processeur de signaux numériques (IP de cœur de DSP) et adoptant des conceptions hétérogènes ; et
exécuter (102) une fonction de traitement de puce dans un produit vocal intelligent correspondant en utilisant la puce vocale, dans lequel des fonctions différentes sont exécutées en utilisant respectivement le premier DSP et le second DSP, **caractérisé en ce que** :
le premier DSP adopte une configuration standard avec des mémoires de programmes et de données, comprenant : un premier cœur de DSP, une première mémoire de programmes, une première mémoire de données, une première mémoire cache de programmes (Icache), une première mémoire cache de données (Dcache), une première interface de bus maître d'interface extensible évoluée (AXI_M), et une première interface de bus esclave d'interface extensible évoluée (AXI_S),
le second DSP adopte une configuration non standard sans mémoires de programmes et de données, comprenant : un second cœur de DSP, une seconde Icache, une seconde Dcache, et une seconde interface de bus AXI_M ; et le second DSP accède à un dispositif externe par l'intermédiaire de la seconde Icache et de la seconde Dcache pour acquérir des programmes et des données requis,
dans lequel le second DSP est en outre configuré pour partager des espaces de stockage de la première mémoire de programmes et de la première mémoire de données par l'intermédiaire de la seconde interface de bus AXI_M et de la première interface de bus AXI_S,
dans lequel le premier DSP est configuré pour réaliser une première fonction qui requiert une capacité de stockage fixe, et le second DSP est configuré pour réaliser une seconde fonction qui requiert une capacité de stockage non fixe, et la seconde fonction a une exigence de performance en temps réel inférieure à celle de la première fonction.

2. Procédé selon la revendication 1, dans lequel
le dispositif externe est situé dans la puce vocale ; et
le dispositif externe comprend : un contrôleur de mémoire à accès aléatoire dynamique (DRAM) synchrone à double débit de données (DDR) et/ou une mémoire à accès aléatoire pseudo-statique (PSRAM).

3. Procédé selon la revendication 1 ou la revendication 2, dans lequel
la première fonction exécutée par le premier DSP comprend : un réveil vocal et une reconnaissance vocale ; et
la seconde fonction exécutée par le second DSP comprend : un système d'exploitation, une transmission de compression vocale, et une connexion de protocole sans fil étendu.

4. Puce vocale (500, 600), comprenant : un premier DSP et un second DSP ;
le premier DSP (501) et le second DSP (502) correspondant à un même IP de cœur de DSP ; et
la puce vocale (500, 600) étant configurée pour réaliser une fonction de traitement de puce dans un produit vocal intelligent, dans laquelle le premier DSP (501) et le second DSP (502) adoptent des conceptions hétérogènes et sont respectivement configurés pour mettre en œuvre des fonctions différentes dans le produit vocal intelligent, **caractérisée en ce que**
le premier DSP (501) adopte une configuration standard avec des mémoires de programmes et de données, comprenant : un premier cœur de DSP, une première mémoire de programmes, une première mémoire de données, une première Icache, une première Dcache, une première interface de bus AXI_M, et une première interface de bus AXI_S ;
le second DSP (502) adopte une configuration non standard sans mémoires de programmes et de données, comprenant : un second cœur de DSP, une seconde Icache, une seconde Dcache, et une seconde interface de bus AXI_M ; et la puce vocale (500, 600) comprend en outre : un dispositif externe (503) ; et le second DSP (502) est en outre configuré pour accéder au dispositif externe (503) par l'intermédiaire de la seconde Icache et de la seconde Dcache pour acquérir des programmes et des données requis, et
le second DSP (502) est en outre configuré pour partager des espaces de stockage de la première mémoire de programmes et de la première mémoire de données par l'intermédiaire de la seconde interface de bus AXI_M et de la première interface de bus AXI_S,
dans laquelle le premier DSP est configuré pour réaliser une première fonction qui requiert une capacité de stockage fixe, et le second DSP est configuré pour réaliser une seconde fonction qui requiert une capacité de stockage non fixe, et la seconde fonction a une exigence de performance en temps réel inférieure à celle de la première fonction.

5. Puce vocale (500, 600) selon la revendication 3, dans laquelle
le dispositif externe (503) comprend : un contrôleur de DRAM synchrone à DDR et/ou une PSRAM.

6. Produit vocal intelligent (700), comprenant : la puce vocale (500, 600) selon la revendication 4 ou la revendication 5.

7. Support d'informations non transitoire lisible par ordinateur maintenant des instructions d'ordinateur qui, lorsqu'elles sont exécutées par une puce vocale selon la revendication 4 ou la revendications 5, amènent la puce vocale à mettre en œuvre le procédé selon l'une quelconque des revendications 1 à 3.

8. Produit-programme d'ordinateur, comprenant des instructions qui, lorsque le programme est exécuté par une puce vocale selon la revendication 4 ou la revendication 5, amènent la puce vocale à mettre en œuvre le procédé selon l'une quelconque des revendications 1 à 3.
